(19)

Europäisches
Patentamt
European
Patent Office
Office européen
des brevets

(11)　**EP 4 191 520 A1**

(12)　　**EUROPEAN PATENT APPLICATION**

(43) Date of publication:
**07.06.2023　Bulletin 2023/23**

(21) Application number: **21211556.2**

(22) Date of filing: **01.12.2021**

(51) International Patent Classification (IPC):
*G06T 7/00* *(2017.01)*

(52) Cooperative Patent Classification (CPC):
**G06T 7/0012;** G06T 2207/10072;
G06T 2207/10116; G06T 2207/20128;
G06T 2207/30048; G06T 2207/30101

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventors:
　• **WISSEL, Tobias
　　Eindhoven (NL)**

　• **NICKISCH, Hannes
　　Eindhoven (NL)**
　• **SCHNELLBÄCHER, Nikolas David
　　Eindhoven (NL)**
　• **SCHMITT, Holger
　　Eindhoven (NL)**
　• **GRASS, Michael
　　Eindhoven (NL)**

(74) Representative: **Philips Intellectual Property &
Standards
High Tech Campus 52
5656 AG Eindhoven (NL)**

(54)　　**A METHOD AND PROCESSOR FOR ANALYZING THE VASCULATURE OF A  SUBJECT**

(57)　　A method is provided for analyzing the vasculature of a subject. A vessel tree is identified in an image of a region of interest. The major vessels, forming part of a standardized tree of the major vessels, are identified, and in turn the remaining vessels of the identified vessel tree are identified, thus excluding the major vessels of the standardized tree. This isolates the collateral vessels in the region of interest, and an analysis of the collateral vessels can then be performed.

FIG. 2

EP 4 191 520 A1

**Description**

FIELD OF THE INVENTION

This invention relates to the analysis of images showing the blood vessels of a subject.

BACKGROUND OF THE INVENTION

Vascular disease in the coronary or peripheral system often involves stenotic lesions or even total occlusions in the blood supply of body tissue.

The existence and extent of collateral vessel formation has been identified as an important marker for two different aspects. First, collateral vessels have been found as an indicator for a working compensation mechanism of the human body: stenotic lesions are compensated by the development of collateral circulation to maintain perfusion to areas which otherwise would have been strongly ischemic and prone to necrosis. Therefore, the formation of collaterals has revealed a negative correlation to patient outcome - i.e. patients with a fair rather than bad collateral formation have been found to have a better prognosis. Second, it is also known that these collaterals do not fully solve the supply problem, because particularly under stress, deficits are still showing.

Either of these two effects emphasizes the relevance of collateral circulation and the need for quantifying the vascular status. Parameters of interest are, among others, the absolute number of collaterals, their diameter (as this is an indicator of how much blood is passing through these bypass pathways instead of the actual vessel), the length of the bypass, and which part of the vascular tree is bypassed.

Algorithms are known for analyzing the vascular system. However, most algorithmic solutions currently focus on the detection of the main vessels, since these can reliably be found in most patients and are typically the target for interventions.

There are however several smaller vessels of higher anatomical variation. Although the characteristics of this remaining part of the vessel tree provide markers indicative for the systemic disease status, they are currently not quantified in state-of-the-art analysis applications. This ignored part of the vasculature may however include many collateral vessels that interconnect different parts of the vessel tree serving as natural bypasses for occluded or stenotic regions.

There is therefore a need to quantify the vascular status of the often-ignored collateral formation, in particular for patients with vascular disease in the main vascular tree.

SUMMARY OF THE INVENTION

The invention is defined by the claims.

According to examples in accordance with an aspect of the invention, there is provided a method of analyzing the vasculature of a subject, comprising:

receiving an image of a region of interest of the subject;
identifying a vessel tree present in the region of interest;
identifying major vessels, forming part of a standardized tree of the major vessels, within the identified vessel tree;
identifying the remaining vessels of the identified vessel tree, thus excluding the major vessels of the standardized tree, thereby to identify collateral vessels in the region of interest; and
performing an analysis of the collateral vessels.

The analysis can provide measurements to be reported to a clinician, for use in quantifying the vascular status, in particular relating to the collateral vessels. This can provide an indication of the presence of vascular disease in the main vascular tree.

The method first detects a standard vascular tree as part of the total detected vascular tree (i.e. net). The standard tree is for example extracted by a hierarchical, rule-based classification, based on the main macro-vascular trunk which is also present in healthy individuals. A statistical atlas of the vessel tree may be used, where structural and locational parameters of the tree are assigned probabilities.

The remaining vascular system comprises the collateral vessels, and these vessels are analyzed, in particular to quantify anatomical properties of the collateral vessel formation. This for example involves parameters such as the number of collateral vessels, the luminal area or blood volume of the collateral vessels, the vessel length or the vascular net density.

Identifying a vessel tree present in the region of interest for example comprises image segmentation and vessel centerline extraction. Algorithms are known for extract vessel geometry from both 2D and 3D image data.

Identifying the major vessels for example comprises using a hierarchical, rule-based classification. Again, algorithms are known for this purpose.

The analysis of the collateral vessels involves determining one or more parameters which are indicative of the formation of collateral vessels.

In a first example, the parameter comprises the number of collateral vessels.

In a second example, the parameter comprises a cumulated length of collateral vessels.

In a third example, the parameter comprises a collateral lumen volume.

In a fourth example, the parameter relates to an inter-vessel area. This parameter may for example comprise a vascular net density computed on a projection onto a reference surface. This projection enables a net density to be obtained by analysis of a 2D image representing the 3D volume of the region of interest. The reference surface for example comprises the epicardial wall alongside a segmented heart image.

Performing an analysis of the collateral vessels may for example comprise normalizing the parameter relative to the value of the parameter for the standardized tree. Alternatively, the analysis of the collateral vessels may comprise normalizing the parameter relative to a reference value of the parameter corresponding to a healthy subject, or relative to a reference value for a particular patient group.

In both cases, this provides an immediately understandable measure with reference to the standardized vessel tree or the healthy population.

The received image may be a 3D image such as 3D computer tomography (CT) angiogram image or a 3D magnetic resonance angiogram (MRA) image.

The received image may however instead be a 2D image, such as a 2D X-ray angiography image.

Thus, the invention is applicable to both diagnostic 3D imaging as well as interventional 2D angiography.

The invention also provides a computer program comprising computer program code means which is adapted, when said program is run on a computer, to implement the method defined above.

The invention also provides a processor which is programmed with the computer program defined above.

The invention also provides an imaging system comprising:

an imager for obtaining an image a region of interest of a subject; and
the processor defined above for analyzing the image thereby to perform an analysis of the collateral vessels in the region of interest.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Figure 1 shows a representation of a 3D image of the heart, showing the major vessels and the full network of vessels;
Figure 2 shows the peripheral vascular system in the foot, for a patient who is not diseased in the foot region;
Figure 3 shows the peripheral vascular system in the foot, for a patient suffering from severe occlusions in the lower calf and foot;
Figure 4 shows a method of analyzing the vasculature of a subject;
Figure 5 shows schematically how the vasculature can be identified from a 3D image, such as 3D CT data;
Figure 6 shows the ellipses A to C of Figure 5, and the determined orientation of the vessel, and the vessel shape D in cross section perpendicular to the vessel axis;
Figure 7 shows how the vasculature is segmented;
Figure 8 shows a procedure for centerline extraction from 3D image data;
Figure 9 shows a stretched longitudinal view on the LCX vessel;
Figure 10 shows an example of interventional 2D angiograms after the segmentation has identified the full and standard tree in the foot vasculature for a patient with little collateral formation;
Figure 11 shows an example of interventional 2D angiograms after the segmentation module has identified the full and standard tree in the foot vasculature and for a patient with mild collateral formation; and
Figure 12 shows an example of an imaging system which may be used to provide the images for analysis using the method of the invention.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for analyzing the vasculature of a subject. A vessel tree is identified in an image of a region of interest. The major vessels, forming part of a standardized tree of the major vessels, are identified, and in turn the remaining vessels of the identified vessel tree are identified, thus excluding the major vessels of the standardized tree. This isolates the collateral vessels in the region of interest, and an analysis of the collateral vessels can then be performed.

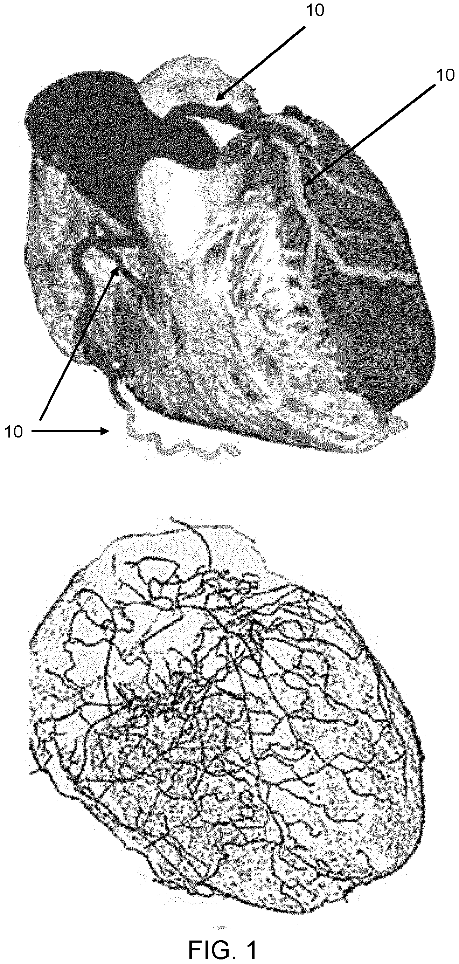

Figure 1 shows in the top image a representation of a 3D image of the heart, showing the major vessels 10. While the major vessels 10 can be found in most patients, vessels on a finer scale may vary more strongly. Among those there can be a large number of collateral vessels which are able to establish a bypass for the blood flow. The number and extent of these collaterals has been found to be a descriptive marker indicative for coronary artery disease.

Figure 1 shows in the bottom image the full network of vessels, showing the minor, collateral vessels. The tree of coronary vessels ensures myocardial perfusion. Anatomical variation is higher the more fine grained the tree becomes.

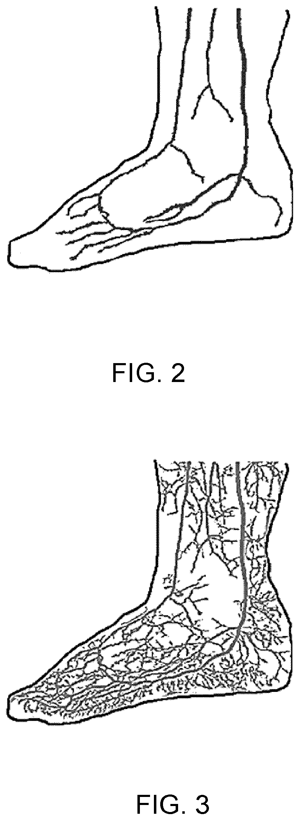

Figure 2 shows the peripheral vascular system in the foot. In the top image, a patient is not diseased (or less diseased than in Figure 3) in the foot region, and it shows mainly the three major vessels arriving from the calf and supplying the foot. The bottom image is for a patient suffering from severe occlusions in the lower calf and foot. As a compensation mechanism, several collaterals have developed.

The invention is based on isolating the collateral vessels for analysis.

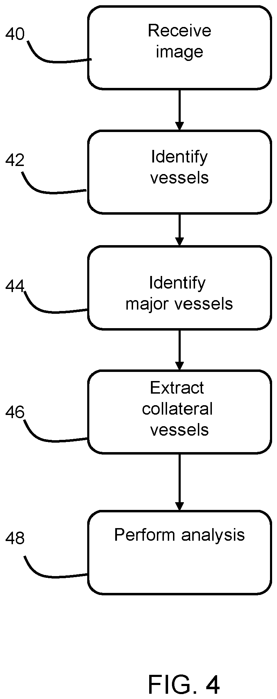

Figure 4 shows a method of analyzing the vasculature of a subject.

In step 40, an image of a region of interest of the subject is obtained. This may be the chest region for analysis of the vascular tree in the vicinity of the heart, but it may be any region of interest.

In step 42 a vessel tree present in the region of interest is identified.

In step 44, the major vessels are identified, namely those that form part of a standardized tree of the major vessels.

The remaining vessels within the identified vessel tree can then be identified in step 46, namely all the identified vessels present in the region of interest but excluding the major vessels of the standardized tree. These are thus the collateral vessels in the region of interest.

In step 48, an analysis of the collateral vessels is performed. This analysis describes one or more anatomical parameters, based on one or more measures applied to the image data.

The parameters are used to quantify the vascular status, in particular in the presence of vascular disease in the main vascular tree. The number and characteristics of blood-supplied collaterals indicate to what extent the body cannot rely on its standard pathways and thus to what extent collaterals play a critical role in maintaining the overall blood supply.

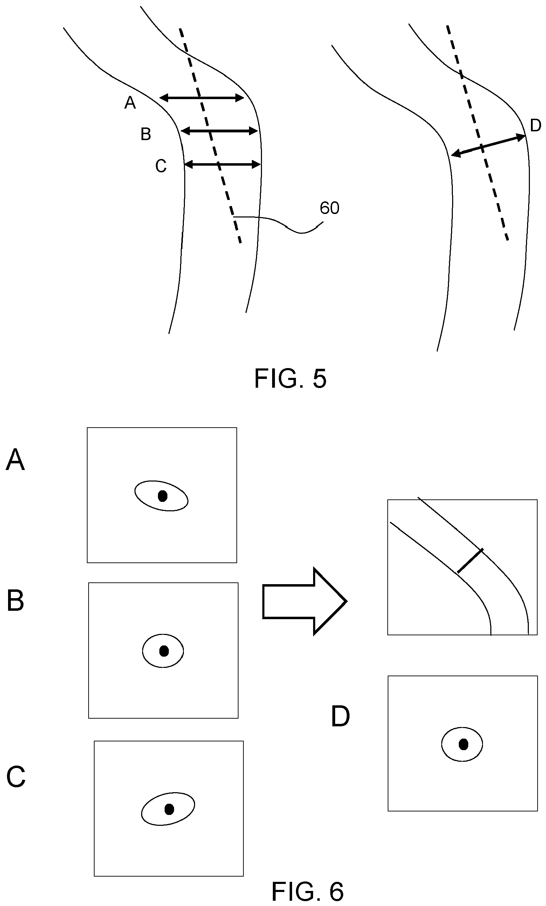

Figures 5 to 7 show in schematic form the process described in Graham et al., Robust 3-D Airway Tree Segmentation for Image-Guided Peripheral Bronchoscopy, TMI, 29:4, 2010.

Figure 5 shows schematically how the vasculature can be identified from a 3D image, such as 3D CT data.

A sequence of 2D ellipses A, B, C is obtained. This is performed along all three axes (x, y, z) by a set of simple thresholding operations followed by connected component analysis and local ellipse fitting.

The ellipses are projected into the plane orthogonal to the vessel centerline 60 connecting three sequential ellipses to result in a final ellipse D that is no longer axis aligned.

Figure 6 shows the ellipses A to C, and the determined orientation of the vessel, and the vessel shape D in cross section perpendicular to the vessel axis. From this image, the vessel diameter and area can be derived.

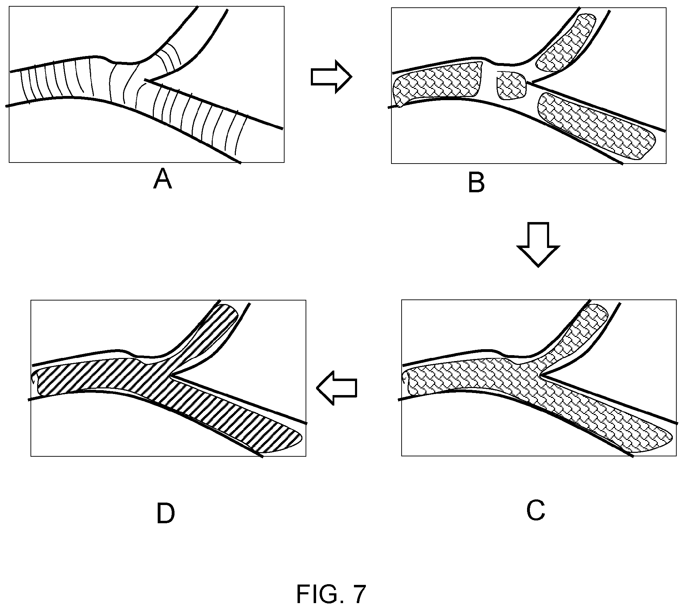

Figure 7 shows how the vasculature is segmented. A sequence of ellipses is obtained as shown in panel A. These are aggregated into a set of vessel segments as shown in panel B. The gaps between the vessel segments are filled by an interpolation step as shown in panel C yielding vessel branches. The vessel branches are voxelized as shown in panel D and the union of all branches yields a binary vessel mask.

This procedure is also described in more detail in:
Graham, Robust Methods for Human Airway-Tree Segmentation and Anatomical-Tree Matching, PhD Thesis, 2008, https://etda.libraries.psu.edu/files/final_submissions/4430.

In summary, the segmentation step gathers local information using axis-aligned ellipses to generate a binary voxel mask. The segmentation module can optionally use an external probabilistic atlas as reference.

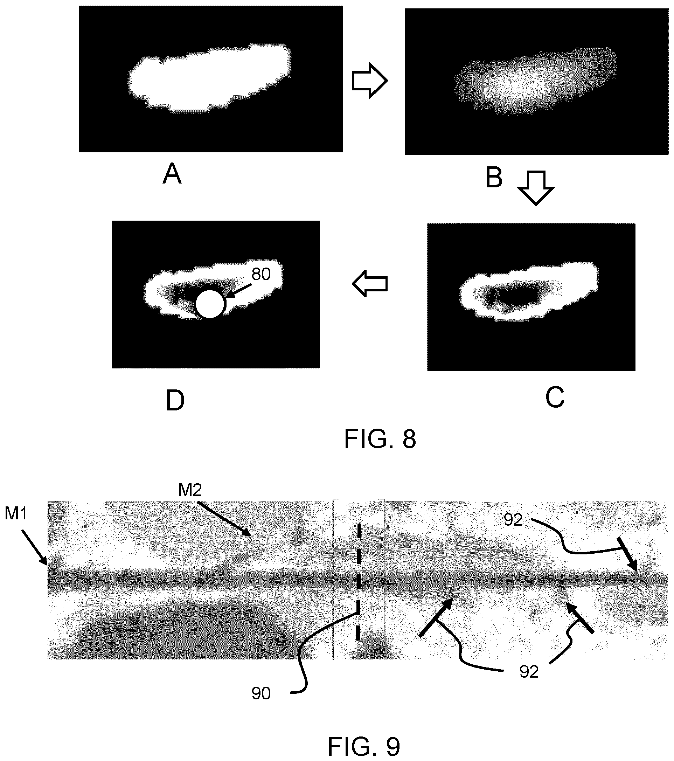

Figure 8 shows the procedure for centerline extraction from 3D image data, such as 3D CT data. Starting from a binary mask shown in panel A, a distance transform is used as shown in panel B, and a distance-to-peak mask is applied as input for the centerline tracker as shown in panel C. A calcium penalty 80 may also be used with a threshold based on the mean aortic intensity + 3 standard deviations to ensure the centerline does not pass through calcified tissue.

The centerline extraction is thus a process of converting the binary mask containing the image volume occupied by the vessel into a tree structure by tracing the branches one after the other.

Postprocessing may then be employed to prune away vein branches and remove double detections. Also smoothing may be applied. A set of heuristics such as maximum length, branching depth, vessel caliber, agreement with coronary vessel atlas, vessel curvature, branching angles and locations is for example used during the postprocessing.

Given a parental vessel (e.g. the left circumflex artery, LCX) the detection of child vessels (e.g. marginals or diagonals) can be supported by computing a stretched lumen view on the vessel. This is a sequence of equally-sized cross-sectional images perpendicular to the parental centerline. A neural encoder model may then be applied (with single or multiple cross-sections as an input) to detect side branches.

Figure 9 shows a stretched longitudinal view on the LCX vessel with the first and second marginal artery branches M1 and M2 on the left side of the marker 90. On the right side, the arrows 92 show further, smaller branches that are potential candidates for collateral blood flow.

For separation of the standardized tree and the collateral tree, the standardized tree is separated out from the collection of candidate centerlines by applying a rule-based classification. The classification and application of rules is performed in a hierarchical manner, for example starting at the left main (LM) coronary artery or the or right coronary artery (RCA) offspring at the ostia, and moving down the vessel tree from parent to children.

The multitude of rules can, for instance, include:

requiring a minimal luminal area/vessel diameter (i.e. a threshold on the vessel caliber);
branching only from a-priori known locations from the main vessel(s). For coronaries, probability distributions for typical LCX branching points from the left anterior descending artery (LAD) may be modelled from a set of earlier patient data and encoded on the LAD centerline as a function of its parental offspring from the LM artery;
truncating at a certain maximum length from the origin (e.g. the ostium for coronaries) or parental offspring.

The output from the segmentation and separation processes is finally given by a labelled standardized vessel tree, and the remaining tree containing small vessels and collateral circulation.

Possible anatomical parameters for the analysis of the collateral vessels will now be discussed.

The output from the segmentation and separation functions can be cast into a form such that A denotes an index set containing all detected/segmented vessel and S denotes an index set running over all detected vessels that belong to the standardized vessel tree.

According to the above specified criteria ($S \subseteq A$). Using this notation, a concrete realization of the collateral vessel quantification can entail the following:
The number of detected collaterals may be quantified as $N_c = |A| - |S|$, where $|A|$ denotes the cardinality of the given index set.

The cumulated collateral vessel length $L_C$ may be quantified as:

$$L_C = \left( \sum_{a \in A} \int_{C_a} dl \right) - \left( \sum_{s \in S} \int_{C_s} dl \right),$$

where $\int_{C_a} dl$ is the contour integral over the segmented vessel contour $C_a$ of vessel $a \in A$. This will typically be approximated by the discrete version $\int_{C_a} dl \simeq \sum_{k=1}^{n_a} \Delta_k$, summing all $n_a$ vessel segments.

The cumulated collateral lumen volume $V_c$ may be quantified as:

$$V_C = \left( \sum_{a \in A} \int_{C_a} A(l) dl \right) - \left( \sum_{s \in S} \int_{C_s} A(l) dl \right),$$

where $A(l)$ denotes the cross-sectional area of the current vessel at contour point $l$. This equation is in practice discretized as described above.

As an alternative to fitting cross sectional areas (e.g. ellipses) the vessel segmentation can be based on binary (voxelized) bitmasks, and the collateral lumen volume is then computed by simply summing all voxels from index set A, subtracting all voxels from index set S, and converting the voxel count to a physical volume measure by using the spatial voxel resolution of the given acquisition.

The inter-vessel area (i.e. the void space between vessels) may be quantified. This measure represents the vessel density or coverage. For easier computation, a projection onto a 2D surface $O$ may be performed (e.g. for coronary vessels onto the myocardium) of known surface area $A_{surf}(O)$.

The vascular tree projection is computed for each voxel of the vessel tree lumen bitmask by using the surface normal of the reference surface, yielding an area:

$$A_{vessel} \leq A_{surf}.$$

Metrics such as the inter-vessel area $A_{void} = A_{surf} - A_{vessel}$ or the vessel density $D = \dfrac{A_{vessel}}{A_{surf}}$ may be calculated in this embedded 2D space.

Various possible parameters are thus set out above. One or more of these parameters may be determined. The parameters may thus comprise a number of collateral vessels, a cumulated length of collateral vessels, a (cumulated) collateral lumen volume, or a parameter relating to an inter-vessel area such as a vascular net density.

The parameters output from the above analysis (*e.g.* $N_c$, $L_c$, $V_c$) can be converted into normalized measures by using the corresponding values from the standardized vessel tree, or from the total vessel tree as reference values. Then e.g. $\widetilde{N_C} = N_C / N_S$ , such that the $\widetilde{N_C}$ denotes the normalized quantity, where any value greater than 1 indicates the excess over the standard vessel tree. The total blood volume can also be reported as normalized by the end-diastolic left ventricle chamber volume.

Further, reference parameter values (e.g. for $N_c$, $L_c$, $V_c$) may be recorded from a healthy patient cohort and use these reference values for normalization. Then the normalized values will indicate the deviation from the healthy patient standard as set by the chosen cohort.

Instead of only normalizing the parameters with respect to generic single healthy patient, the derived parameter value or values may interpreted within the context of particular population statistics relating to the particular patient. These statistics may for example be connected to other clinical parameters such as outcome, disease severity etc.

To interpret the current set of parameter values with respect to the particular patient statistics, one approach is by explicitly indicating where the patient is located within the overall distribution of patient properties, and making use of the parameters of those patients close to the current one. An implicit approach may use data-driven modelling or learning of the statistics and classifying the patient into one of several groups.

The analysis explained above is based on 3D image data such as a 3D angiogram CT scan image or a 3D magnetic resonance angiogram (MRA) image. However, the invention may be applied with 2D X-ray angiography images.

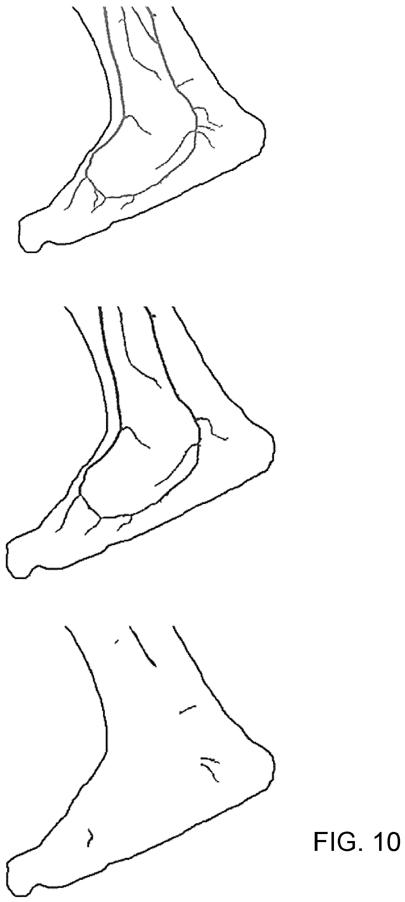

Figure 10 shows an example of interventional 2D angiograms after the segmentation module has identified the full and standard tree in the foot vasculature.

The top image shows the full tree A, the middle image shows the standard tree S and the bottom image shows the remaining tree R = A\S. Figure 10 is for a patient with little or no collateral formation.

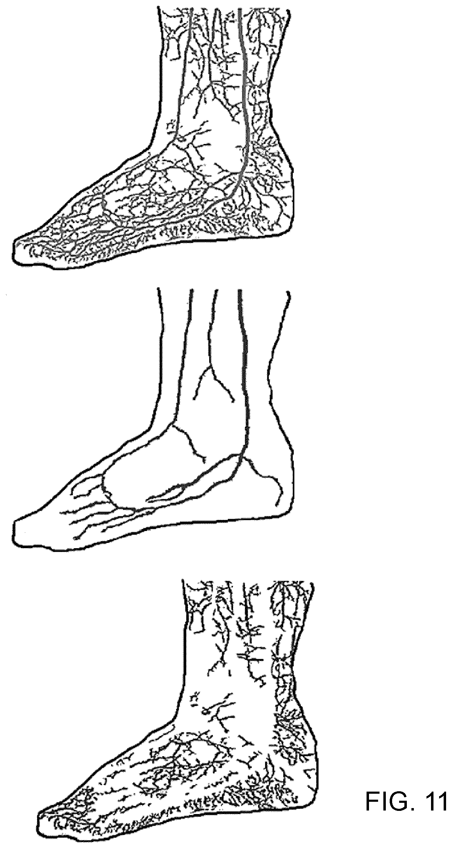

Figure 11 shows an example of interventional 2D angiograms after the segmentation module has identified the full and standard tree in the foot vasculature and for a patient with mild collateral formation.

The top image again shows the full tree A, the middle image shows the standard tree S and the bottom image shows the remaining tree R = A\S.

The collateral quantification parameters can only be approximate in this case due to the projective nature of the imaging modality causing foreshortening effects. The surface for net density computation is directly given by the detector plane.

The segmentation and collateral quantification steps can be improved by using spectral or dynamic CT or X-ray scans.

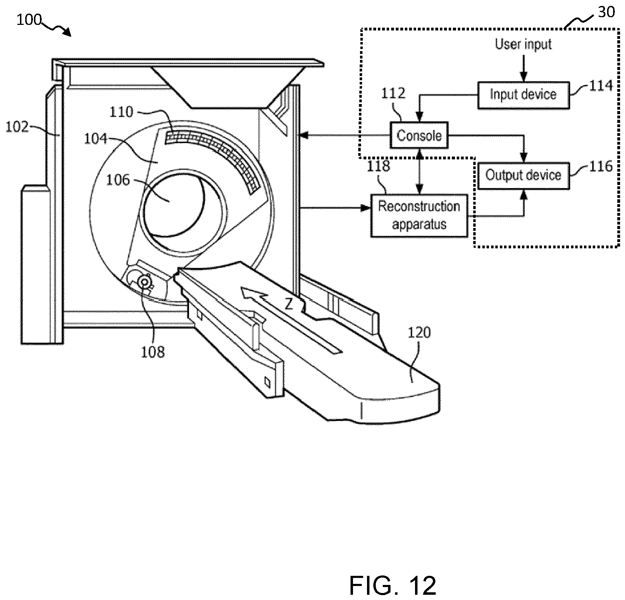

Figure 12 shows an example of an imaging system which may be used to provide the images for analysis using the method of the invention.

The imaging apparatus 100 in this illustration is an X-ray computed tomography (CT) scanner.

The imaging apparatus 100 includes a generally stationary gantry 102 and a rotating gantry 104. The rotating gantry 104 is rotatably supported by the stationary gantry 102 and rotates around an examination region about a longitudinal, axial, or z-axis.

A patient support 120, such as a couch, supports an object or subject such as a human patient in the examination region. The support 120 is configured to move the object or subject for loading, scanning, and/or unloading the object or subject. The support 120 is movable along an axial direction, that is, it is moveable along the direction of the z-axis or the longitudinal axis. Moving the support changes the axial position of the rotating gantry relative to the support (and thus relative to the subject who is supported by it).

A radiation source 108, such as an x-ray tube, is rotatably supported by the rotating gantry 104. The radiation source 108 rotates with the rotating gantry 104 and emits radiation that traverses the examination region 106.

A radiation sensitive detector array 110 subtends an angular arc opposite the radiation source 108 across the examination region 106. The detector array 110 includes one or more rows of detectors that extend along the z-axis direction, detects radiation traversing the examination region 106, and generates projection data indicative thereof.

The rotation of the gantry 104 changes an angular or rotational position of the scanner relative to the subject, and movement of the support along the z-axis changes the axial position of the scanner relative to the subject.

A typical scan will be configured in advance with a scan protocol. A scan protocol comprises a plurality of scanning parameters. The scanning parameters define, among other things, a spatial range of the scan relative to the axial and rotation axes of the scanner. For example, the scan parameters may include boundaries (that is, start and end points) of a scan range along one or more of the axes of the imaging apparatus, for example one or both of the rotational and axial axes. The scan range defines the field of view (FOV) over which imaging data is acquired during the scan. The scanning parameters may typically also include a number of other parameters including for example tube current, tube voltage, scan spatial resolution, scan temporal resolution, and/or fan angle. The resolution parameters may be defined by a speed of rotation of the gantry 104 and the speed of axial movement of the support 120 through the gantry.

A general-purpose computing system or computer serves as an operator console 112 and includes an input device(s) 114 such as a mouse, a keyboard, and/or the like and an output device(s) 116 such as a display monitor or the like. The console, input device(s) and output device(s) form a user interface 30. The console 112 allows an operator to control operation of the system 100.

A reconstruction apparatus 118 processes the projection data and reconstructs volumetric image data. The data can be displayed through one or more display monitors of the output device(s) 116.

The reconstruction apparatus 118 may employ a filtered-backprojection (FBP) reconstruction, a (image domain and/or projection domain) reduced noise reconstruction algorithm (e.g., an iterative reconstruction) and/or other algorithm. It is to be appreciated that the reconstruction apparatus 118 can be implemented through a microprocessor(s), which executes a computer readable instruction(s) encoded or embed on computer readable storage medium such as physical memory and other non-transitory medium. Additionally or alternatively, the microprocessor(s) can execute a computer readable instruction(s) carried by a carrier wave, a signal and other transitory (or non, non-transitory) medium.

The reconstruction apparatus 118 may incorporate a processor which is programmed with a computer program to implement the method described above, for analyzing the generated 3D CT scan image thereby to perform an analysis of the collateral vessels in the region of interest.

The identifying of vessels and the analysis of collateral vessels may involve the use of a trained neural network or the use of handcrafted algorithms.

As discussed above, the system makes use of a processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

**Claims**

1. A method of analyzing the vasculature of a subject, comprising:

   (40) receiving an image of a region of interest of the subject;
   (42) identifying a vessel tree present in the region of interest;
   (44) identifying major vessels, forming part of a standardized tree of the major vessels, within the identified vessel tree;
   (46) identifying the remaining vessels of the identified vessel tree, thus excluding the major vessels of the standardized tree, thereby to identify collateral vessels in the region of interest; and
   (48) performing an analysis of the collateral vessels.

2. The method of claim 1, wherein identifying a vessel tree present in the region of interest comprises image segmentation and vessel centerline extraction.

3. The method of claim 1 or 2, wherein identifying major vessels comprises using a hierarchical, rule-based classification.

4. The method of any one of claims 1 to 3, wherein performing an analysis of the collateral vessels comprises determining a parameter comprising a number of collateral vessels.

5. The method of any one of claims 1 to 4, wherein performing an analysis of the collateral vessels comprises determining a parameter comprising a cumulated length of collateral vessels.

6. The method of any one of claims 1 to 5, wherein performing an analysis of the collateral vessels comprises determining a parameter comprising a collateral lumen volume.

7. The method of any one of claims 1 to 6, wherein performing an analysis of the collateral vessels comprises determining a parameter relating to an inter-vessel area.

8. The method of claim 7, wherein performing an analysis of the collateral vessels comprises determining a vascular net density computed on a projection onto a reference surface.

9. The method of any one of claims 4 to 8, wherein performing an analysis of the collateral vessels comprises normalizing the parameter relative to the value of the parameter for the standardized tree.

10. The method of any one of claims 4 to 8, wherein performing an analysis of the collateral vessels comprises normalizing the parameter relative to a reference value of the parameter corresponding to a healthy subject or relative to a reference value for a patient group relevant for the particular subject.

11. The method of any one of claims 1 to 10, wherein the received image is a 3D image.

12. The method of any one of claims 1 to 10, wherein the received image is a 2D image.

13. A computer program comprising computer program code means which is adapted, when said program is run on a computer, to implement the method of any one of claims 1 to 12.

14. A processor which is programmed with the computer program of claim 13.

15. An imaging system comprising:

   an imager (100) for obtaining an image a region of interest of a subject; and
   the processor (118) of claim 14 for analyzing the image thereby to perform an analysis of the collateral vessels in the region of interest.

FIG. 1

FIG. 2

FIG. 3

40 Receive image

42 Identify vessels

44 Identify major vessels

46 Extract collateral vessels

48 Perform analysis

FIG. 4

FIG. 5

FIG. 6

FIG. 7

FIG. 8

FIG. 9

FIG. 10

FIG. 11

FIG. 12

Europäisches
Patentamt

European
Patent Office

Office européen
des brevets

# EUROPEAN SEARCH REPORT

Application Number

EP 21 21 1556

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VAN HORSSEN PEPIJN ET AL: "Innate collateral segments are predominantly present in the subendocardium without preferential connectivity within the left ventricular wall : Distribution and morphology of innate collateral connections", THE JOURNAL OF PHYSIOLOGY, vol. 592, no. 5, 23 January 2014 (2014-01-23), pages 1047-1060, XP055920694, GB ISSN: 0022-3751, DOI: 10.1113/jphysiol.2013.258855 | 1-4,7, 10-15 | INV. G06T7/00 |
| Y | * page 1047 - page 1051 * | 5,6 | |
| A | | 8,9 | |
| Y | PEARLMAN ET AL: "Extent of myocardial collateralization: Determination with three-dimensional elastic-subtraction spiral CT", ACADEMIC RADIOLOGY, ELSEVIER, AMSTERDAM, NL, vol. 4, no. 10, 1 October 1997 (1997-10-01), pages 680-686, XP005241105, ISSN: 1076-6332, DOI: 10.1016/S1076-6332(97)80139-0 * page 680 * * page 682 * * page 685 * | 5,6 | TECHNICAL FIELDS SEARCHED (IPC) G06T |

The present search report has been drawn up for all claims

| Place of search | Date of completion of the search | Examiner |
|---|---|---|
| Munich | 16 May 2022 | Katartzis, Antonios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GRAHAM et al.** Robust 3-D Airway Tree Segmentation for Image-Guided Peripheral Bronchoscopy. *TMI,* 2010, vol. 29, 4

- **GRAHAM.** Robust Methods for Human Airway-Tree Segmentation and Anatomical-Tree Matching. *PhD Thesis,* 2008, https://etda.libraries.psu.edu/files/final_submissions/4430